# EUROPEAN PATENT SPECIFICATION

(11) **EP 3 387 251 B1**
(45) Date of publication and mention of the grant of the patent: **25.12.2019**
(21) Application number: 16805428.6
(22) Date of filing: 02.12.2016
(51) Int. Cl.: F03D 1/06

(54) **ROTOR BLADE FOR A WIND TURBINE**
ROTORBLATT FÜR EINE WINDTURBINE
PALE DE ROTOR POUR UNE ÉOLIENNE

(30) Priority: 08.12.2015 EP 15198408
(43) Date of publication of application: 17.10.2018
(73) Proprietor: Winfoor AB, 227 64 Lund (SE)
(72) Inventor: BERTHILSSON, Rikard, SE-244 60 Furulund (SE); WEDDIG, Björn, SE-226 46 Lund (SE); PESLIAKAS, Gerardo, 21075 Hamburg (DE)
(74) Representative: AWA Sweden AB
(86) International application number: PCT/EP2016/079587
(87) International publication number: WO 2017/097677

(56) References cited:
- EP-A1- 0 274 777
- WO-A2-2014/006542
- DE-A1-102009 040 515
- US-A- 4 295 790
- US-A1- 2012 027 608

## Description

### Field of invention

The invention relates to a rotor blade, which may be used in a wind turbine. An example of a blade of a wind turbine is known from EP 0 274 777 A1.

### Technical Background

There is a growing interest in renewable energy technologies throughout the world. For instance, climate change concerns are driving energy production to renewable energy technologies. Wind power is therefore an important energy source and the amount of power produced annually through wind power is growing rapidly.

Wind power is the conversion of wind energy into more useful forms, such as electricity. In this regard, use is made of a wind turbine, which is a device that converts kinetic energy from the wind into electrical power. A wind turbine comprises a rotor having a central hub, to which one or more blades are attached. The rotor is arranged to rotate as the blades are subject to a mass of air passing the wind turbine due to a blowing wind. The rotation of the rotor thus generates mechanical energy that may be converted to electrical power in the wind turbine.

The blades are formed with an airfoil-shaped cross-section. This implies that the blades are formed such that the surface at the leading side in the rotational direction of the blade causes the air passing the surface to take a longer path than the air passing the surface at the trailing side. Hence, the air passing over the surface at the leading side will travel faster than the air passing over the surface at the trailing side. Therefore, a difference in pressure is formed, resulting in a force on the blade. This force induces a torque about a rotor axis which causes the rotor to rotate.

The relative flow velocity, including speed and direction, between a moving blade and the air is called the apparent flow velocity. As air passes the surface of an airfoil shaped blade it exerts a force on it that depends on the apparent flow velocity and the shape of the airfoil. Lift force is the component of the force that is perpendicular to the oncoming apparent flow direction. It contrasts with the drag force, which is the component of the force parallel to the apparent flow direction. Contrary to the lift force, the drag force tends to counteract the movement of the blade and it can be shown through mathematical analysis that in order to optimize the power efficiency of the turbine the blade should be designed so as to maximize the ratio between the lift force and the drag force.

The power production capacity of a wind turbine is mainly affected by the length of the blades. The power generated by a wind turbine is proportional to the area swept by the blades, which is proportional to the square of the length of the blades. Hence, an increased length of the blades enables an increased power production of the wind turbine.

However, there are several problems associated with increasing the length of blades. For instance, the mass of the blades, which increases rapidly with the length, causes the blades to be exerted to gravity loads and eventually there is a risk of fatigue failure due to the large mass of the blade.

Further, when the wind turbine is to be installed, the wind turbine parts need to be transported to the site of the wind turbine. The wind turbine consists of very large parts, such as the long blades, which makes transportation of the parts to the site a difficult task. For instance, the wind turbine parts may be much longer than the usually allowed length of vehicles, which implies that special vehicles need to be used for transportation of the parts on land. Further, the mass of the wind turbine parts may also set special requirements in order to allow transportation of the parts to the site. Altogether, problems associated with transportation of long blades will limit the economically feasible size, at least for land based wind turbines. Also, installation of the parts on the site is cumbersome due to the mass and length of the parts.

### Summary of invention

It is an object of the invention to provide blades that may be relatively easy to transport, even for very long blades. It is a further object of the invention to provide blades that have a relatively low mass.

These and other objects of the invention are at least partly achieved by the invention as defined in the independent claims. Preferred embodiments are set out in the dependent claims.

According to a first aspect of the invention, there is provided a rotor blade for a wind turbine, the rotor blade comprising: two or more wing members extending along each other, at a distance from each other, and along a longitudinal direction of the rotor blade, wherein each wing member has an airfoil shaped cross-section as seen in a plane transverse to the longitudinal extension of the wing member, wherein each wing member is divided into at least a first sub-member and a second sub-member, the sub-members being arranged one after another along the longitudinal direction, wherein each sub-member comprises a longitudinally extending first part of a wing profile and a longitudinally extending second part of the wing profile, the parts of the wing profile being connected to each other thereby forming a shell structure, and at least one inner support member, preferably at least two inner support members, extending inside the shell structure from an inside of the first part of the wing profile to an inside of the second part of the wing profile, wherein each sub-member is arranged in the rotor blade with an inner end angular orientation about the longitudinal direction at an inner end and an outer end angular orientation about the longitudinal direction at an outer end thereby forming a discrete portion of the longitudinal extension of respective wing member, wherein, in each wing member, at an interface between the first and the second sub-member, the first sub-member is arranged in the rotor blade with said outer end angular orientation about the longitudinal direction and the second sub-member is arranged in the rotor blade with said inner end angular orientation about the longitudinal direction, the inner end angular orientation of the second sub-member being different from the outer end angular orientation of the first sub-member.

Thanks to the wing members being divided into at least a first sub-member and a second sub-member, it is possible to manufacture and transport the wing members in sections. Thus, the transport of the rotor blade may be less cumbersome without requiring exceptionally long vehicles, as the rotor blade may be transported in sections and may be assembled at the site of the wind turbine. Moreover, by each sub-member comprising a longitudinally extending first part of a wing profile and a longitudinally extending second part of the wing profile, and by the parts of the wing profile being connected to each other thereby forming a shell structure there is given a design freedom whereby the shape of the first part of the wing profile may be optimised for manufacture and/or aerodynamic performance almost independently of the design of the second part of the wing profile. Moreover, by having the shell structure and at least one inner support member, preferably at least two inner support members, extending inside the shell structure from an inside of the first part of the wing profile to an inside of the second part of the wing profile, it is possible to provide sub-members with a low weight. The support members may provide support for maintaining a shape of the wing profile when the sub-member is subject to external forces. Thus, the wing profile may provide a shell structure which is supported by the support members and the entire sub-member may therefore be light-weight.

The first and second parts of the wing profile may together form an airfoil shaped cross-section of the sub-member, such that the sub-member may provide aerodynamic properties providing a lift-to-drag ratio when the wing members are subject to a wind.

A rotor blade is normally designed with a twist, i.e. the cross-section of the rotor blade has different angular orientations about the longitudinal direction of the rotor blade along the longitudinal direction. This is due to the fact that a tip of the rotor blade is moving faster through the wind than a root part of the rotor blade. Due to the difference in speed, an angle of attack relating the cross-section of the rotor blade to the wind becomes different. Thus, in order to have a common angle of attack along the rotor blade, the rotor blade is twisted along its longitudinal direction.

According to the first aspect of the invention, each wing member becomes twisted at least partly thanks to the inner end angular orientation of the second sub-member at the interface between the first and second sub-members being different from the outer end angular orientation of the first sub-member. Thus, there is a discrete change in angular orientation at the interface, which may not be optimal for the aerodynamic properties of the wing member. However, thanks to the difference in angular orientations at the interface, there is a larger degree of freedom in design of each of the sub-members, which may in particular make it easier to manufacture the sub-members.

For instance, the entire twist of the wing member may be provided at the interface between the sub-members. This implies that the first and second sub-members may be manufactured as straight elements, which may substantially facilitate easier manufacture of the sub-members.

According to the first aspect of the invention, the rotor blade comprises two or more, preferably three, wing members. This implies that the aerodynamic properties of the rotor blade are provided by the two or more wing members. One of the wing members may then partly affect or interfere with the wind incident on the other wing member. However, the wing members may jointly provide good aerodynamic properties and by the rotor blade having two or more wing members, each of the wing members will typically not be as heavy as a rotor blade having only a single wing member. Therefore, for large-size rotor blades, it may be advantageous to use two or more wing members.

In particular, the rotor blade may comprise a truss-like three-dimensional structure, having diagonal truss members extending along the longitudinal direction of the rotor blade from one wing member of the rotor blade to another wing member of the rotor blade. Thanks to the truss-like structure, the rotor blade may have a strong and stable structure, although the wing members and the diagonal truss members may be relatively thin and light weight, such that a total weight of the rotor blade may be considerably lighter than a rotor blade having a unitary shape. Thus, such a design of the rotor blade may be especially advantageous for large size rotor blades. Moreover, this also allows each wing member to be designed to a large extent in view of the desired aerodynamic properties. This is especially true compared to a rotor blade with a single wing in which a large portion of the wing need to be designed largely to be able to carry the load and to a less extent in view of the aerodynamic properties.

Further, when the rotor blade comprises a truss-like three-dimensional structure, elements of the rotor blade may need to be assembled into the truss-like structure. It has thus been realized that the wing members may comprise first and second sub-members, which may be part of the truss-like structure. It may thus be advantageous to arrange the inner end angular orientation of the second sub-member to be different from the outer end angular orientation of the first sub-member in order to utilize assembly of separate elements into a truss-like rotor blade to also provide the twist of the wing members.

A diagonal truss member of the truss-like structure may be connected at the interface between the first and the second sub-member such that the interface is provided as a joining point in the truss-like structure.

According to a second aspect of the invention, there is provided a rotor blade for a wind turbine, the rotor blade comprising a plurality of elements extending along a longitudinal direction of the rotor blade, wherein the elements form part of a truss-like three-dimensional structure of the rotor blade having two or more, preferably three, wing members which are separated along the entire longitudinal direction of the rotor blade, wherein each element of the rotor blade have a uniform cross-section profile along the longitudinal direction thereof. Having a uniform cross-section profile along the longitudinal direction means that the element has the same shape, size and orientation along its longitudinal direction. It may be noted that all the elements need not have the same uniform cross-section. It is e.g. conceivable that the first elements (positioned close to the root) of each wing member have the same first uniform cross-section but oriented differently to form part of respective wing member, and that e.g. the second elements of respective wing member have the same second uniform cross-section but oriented differently to form part of respective wing member. The cross-sections of the first and second elements may be the same but oriented differently in respective wing member to provide a twist of respective wing member. Alternatively, the cross-sections of the second elements may be different from the cross-sections of the first elements. It is also conceivable that along a wing member e.g. the first and second elements have the same cross-sections but oriented differently and that a third or further elements have another cross-section. In one embodiment all the elements have the same cross-section but oriented differently along the longitudinal direction of the respective wing member.

Thanks to the second aspect of the invention, the rotor blade may be formed by elements that have a uniform cross-section. This implies that the manufacture of the elements may be facilitated. For instance, the elements may be formed by pultrusion, which may allow for very inexpensive manufacture of the elements. The wing members of the rotor blade may be formed by a first and a second sub-member, which may each be part of the plurality of elements of the rotor blade.

As used herein, a "truss-like structure" should be construed as a three-dimensional framework of elements. The framework thus constitutes a three-dimensional structure that forms the overall shape of the blade. A truss is a structure that is formed by straight elements that are connected at joints to form units of triangles. The structure should have enough elements to make it stable and rigid against forces acting at the joints. The elements should furthermore be free to rotate around the joints. In a truss, moments (torques) cannot be transferred within the truss and the elements are therefore subjected to only axial forces (tensile and compressive forces).Within the context of this application, the "truss-like structure" should be construed as a truss, but not necessarily having joints that cannot transfer any moments. For instance, at least three elements may be connected at a joint, but not all elements need to be connected at exactly a single point. Rather, one or two of the elements may be connected close to the joint, but not in an exact single position connecting all elements at the joint. A two-dimensional truss is one where all the elements and joints lie within a two dimensional plane, while a three-dimensional truss has elements and joints extending into three dimensions.

Further, "longitudinal direction" of a rotor blade should be construed as a general extension from a root of the rotor blade, closest to the hub to which the rotor blade is attached, to a tip of the rotor blade, farthest away from the hub. Also, in connection to the longitudinal direction, "inner" generally refers to being closer to the root of the rotor blade and "outer" generally refers to being closer to the tip of the rotor blade.

Each wing member have an airfoil shaped cross-section as seen in a plane transverse to the longitudinal extension of the wing member. The wing member may thus have aerodynamic properties providing a large lift-to-drag ratio when the wing members are subject to a wind.

According to an embodiment of the first aspect, each wing member is divided into at least a first, a second, and a third sub-member, wherein, in each wing member, at an interface between the second and the third sub-member, the second sub-member is arranged in the rotor blade with said outer end angular orientation about the longitudinal direction and the third sub-member is arranged in the rotor blade with said inner end angular orientation about the longitudinal direction, the inner end angular orientation of the third sub-member being different from the outer end angular orientation of the second sub-member.

Thanks to the wing member being divided into at least three sub-members, there is a plurality of interfaces between sub-members along the longitudinal direction of the wing member. Thus, the change in angular direction for achieving a twisting of the wing member may be divided among a plurality of interfaces. Hence, the discrete change in angular orientation at the interface may be relatively small so as to not cause a large effect on the aerodynamic properties of the rotor blade.

According to a further embodiment, the inner end angular orientation of the second sub-member is shifted a first angle in a first direction relative to the outer end angular orientation of the first sub-member at the interface between the first and second sub-member, and the inner end angular orientation of the third sub-member is shifted a second angle in the first direction relative to the outer end angular orientation of the second sub-member at the interface between the second and third sub-member, and wherein the second angle preferably is smaller than the first angle.

This implies that the shift in angular orientation may differ along the longitudinal direction of the wing member. This may be advantageously used in order to adapt the shift in angular orientation to a longitudinal position of the wing member. A larger twist of the wing member may be needed at the root of the rotor blade and, hence, the second angle is preferably smaller than the first angle.

According to yet another embodiment, the third sub-member has a length along the longitudinal direction being larger than a length of the first sub-member along the longitudinal direction.

This implies that interfaces between sub-members need not be equidistantly placed along the longitudinal direction of the rotor blade. For instance, as a larger twist of the wing member may be needed at the root of the rotor blade, it may be advantageous to provide interfaces for changing angular orientation more frequently closer to the root of the rotor blade. This may be combined with also having larger shifts in angular orientation at interfaces closer to the root of the rotor blade.

According to an embodiment, at least one, and preferably all, sub-members of each wing member is formed along a plane such that, for respective sub-member, the angular orientation of the cross section profile is fixed along its longitudinal direction and thereby giving that the inner end angular orientation is equal to the outer end angular orientation.

This implies that the sub-members may be easily manufactured as no change in angular orientation is necessary along the length of the sub-member. Thus, a simple structure is to be formed which allows for inexpensive manufacture processes for the sub-members.

However, although sub-members formed along a plane may be particularly easy to manufacture, it should be realized that the rotor blade according to the first aspect may be advantageously used even if the sub-members are not formed along a plane. For instance, a twist of one or more, or even all, of the sub-members may be so beneficial for the aerodynamic properties of the rotor blade as a whole, that it may be used even if such sub-members are more difficult to manufacture.

According to an embodiment, said inner support member or members together with the inside of the first part of the wing profile and the inside of the second part of the wing profile form a connection tube with a longitudinal extension inside the shell structure of the sub-member, wherein the connection tube is adapted to receive a connector rod for interconnecting the sub-member to an adjacent sub-member by the connector rod also being received in a connection tube of said adjacent sub-member.

Alternatively, the sub-member may be regarded as a separate aspect of the invention according to which there is provided a sub-member adapted to extend from an inner end to an outer end and to thereby form a discrete portion of a longitudinal extension of a wing member of a rotor blade for a wind turbine, the sub-member comprising: a longitudinally extending first part of a wing profile and a longitudinally extending second part of the wing profile, the parts of the wing profile being connected to each other thereby forming a shell structure, at least one inner support member, preferably at least two inner support members, extending inside the shell structure from an inside of the first part of the wing profile to an inside of the second part of the wing profile, wherein said inner support member or members together with the inside of the first part of the wing profile and the inside of the second part of the wing profile form a connection tube with a longitudinal extension inside the shell structure of the sub-member, wherein the connection tube is adapted to receive a connector rod for interconnecting the sub-member to an adjacent sub-member by the connector rod also being received in a connection tube of said adjacent sub-member. Embodiments of the sub-member as such and the sub-member as provided in a rotor blade are discussed simultaneously in the following.

The connection tube of the sub-member provides a structure for receiving a connector rod, so that the sub-member may be connected to an adjacent sub-member. Thanks to this structure, the sub-member is adapted to be used in a rotor blade according to the first aspect of the invention.

According to an embodiment, the first and second parts of the wing profile are formed of a fibre reinforced polymer. Thus, the sub-member and the wing members formed of the sub-members may be formed of a light-weight material.

According to another embodiment, said inner support member or members are formed of a fibre reinforced polymer. Preferably, the sub-member is completely formed of a fibre reinforced polymer, as the sub-member may be light-weight. Further, by the sub-member having no metal parts, a risk of lightning striking the sub-member is greatly reduced.

According to an embodiment, the first and second parts of the wing profile each has a uniform cross-section along the longitudinal direction from the inner end to the outer end. Thus, the wing profile may be easily manufactured. The first and second parts of the wing profile may be jointly formed, or separately formed and later attached to form the sub-member.

According to an embodiment, the sub-members each has a uniform cross-section along the longitudinal direction from the inner end to the outer end. This implies that manufacturing of the sub-member may be greatly facilitated. For instance, the sub-member may be manufactured by pultrusion, where the desired cross-sectional profile of the sub-member is pulled out to form a longitudinal member having the desired cross-section and the pulled-out structure may then be cut at a desired length, whereby the sub-member is formed.

According to an embodiment, the sub-members are produced using a sandwich structure comprising a core material, an outer structure and an inner structure on each side of the core material. This way the sub-members may be light weight and still have a high bending stiffness.

According to an embodiment, there is arranged one or more frame members at respective end of respective sub-member. The provision of a frame member locally strengthens the sub-member at the interface between the sub-members and the connector plates.

According to another embodiment, the interfaces between the first and second sub-members are positioned at corresponding longitudinal positions for each wing member, wherein a connector member is positioned at said interface. The connector member is configured to connect the wing members to each other.

The connector member may be a connector plate being provided with at least one, through a thickness of the connector plate, through-going hole or recess associated with each wing member, wherein each through-going hole or recess associated with each wing member is adapted to receive a longitudinally extending connector rod adapted to extend partly into said connection tube of the first sub-member, through said through-going hole or recess, and partly into said connection tube of the second sub-member.

The connector members or connector plates may thus connect the wing members to each other for supporting the structure of the rotor blade. Since sub-members of each wing member is to be connected to each other at interfaces, it is advantageous to also connect the wing members to each other at the same interfaces.

The connector members or connector plates may further be part of a truss-like structure of the rotor blade. Thus, the interfaces may be joints for connecting elements of the truss-like structure to each other.

Diagonal truss members may also be attached at the interfaces such that the wing members, diagonal truss members and connector members or connector plates together may form three-dimensional units, such as tetrahedron units. The diagonal truss members may preferably extend from the interface between two sub-members of a first wing member to the interface between two sub-members of a second wing member, wherein the interfaces of the first and second wing members are at different longitudinal positions.

According to another embodiment, the connector rod has a non-circular outer envelope surface and the connection tube of the first sub-member, the through-going hole or recess, and the connection tube of the second sub-member have a fully or partly correspondingly shaped inside envelope surfaces such that the connector rod is prevented from relative rotational movement about an axis along the longitudinal direction in relation to the connection tube of the first sub-member, the through-going hole or recess, and the connection tube of the second sub-member. This implies that the connector rod may be firmly arranged in the first sub-member, the connector plate and the second sub-member. Since rotational movement is prevented, a risk of the connector rod moving out of engagement with any of the first or second sub-members is diminished.

In the above certain criteria concerning the design of a sub-member is discussed in the general context where there are two or more sub-members. It may be noted that also in the case each wing member is divided into three or more sub-members the above mentioned criteria concerning respective sub-member applies to respective sub-member. Basically, unless otherwise stated, the criteria disclosed for a sub-member in this application are applicable for respective sub-member independently from the number of sub-members used to form respective wing member. Such criteria include e.g. that in the case three or more sub-members are used, the three or more sub-members are arranged one after another along the longitudinal direction, and that each of the three or more sub-members are arranged in the rotor blade with an inner end angular orientation about the longitudinal direction at an inner end and an outer end angular orientation about the longitudinal direction at an outer end.

### Brief description of the drawings

The invention will by way of example be described in more detail with reference to the appended schematic drawings, which shows a presently preferred embodiment of the invention.
Fig. 1 is a schematic view of a horizontal-axis wind turbine.
Fig. 2 is a perspective view of a rotor blade according to an embodiment of the invention.
Fig. 3 is an exploded view of an interface between sub-members of a wing member of the rotor blade.
Fig. 4 is a perspective view of the interface in Fig. 3.
Fig. 5 is a schematic cross-sectional view of a structure of a material of an element of the rotor blade.
Fig. 6 is a schematic cross-sectional view of a sub-member according to an embodiment.

### Detailed description of preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

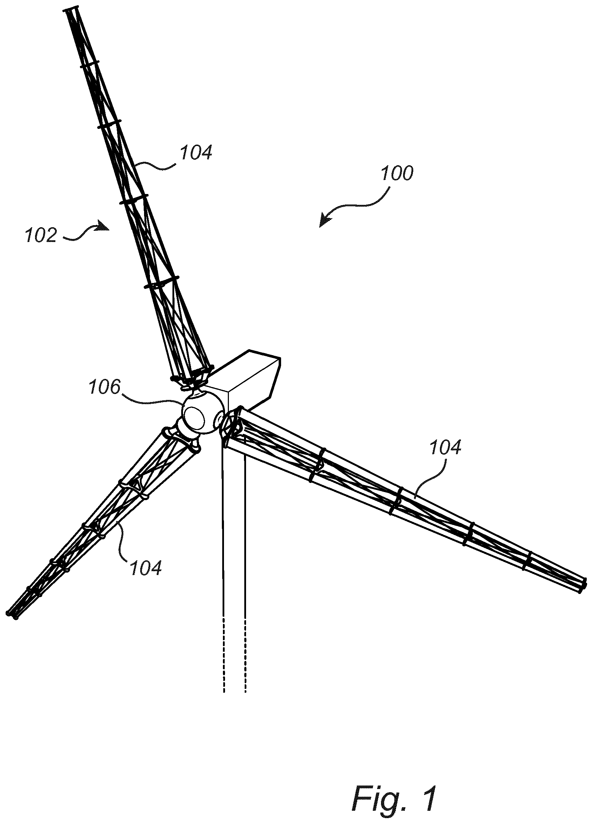

Referring now to Fig. 1, a horizontal-axis wind turbine 100 is shown. The wind turbine 100 comprises a rotor 102. The rotor 102 has rotor blades 104 and a central hub 106 to which the rotor blades 104 are attached such that the rotor blades 104 form cantilevered structures that are anchored only to the central hub 106. The rotor 102 captures energy of a mass of air that passes the rotor 102 due to a blowing wind. The energy is captured by means of the wind forcing the rotor blades 104 to bring the rotor 102 to rotate. The rotor 102 is then connected in the wind turbine 100 to a generator (not shown) for converting the captured energy into electrical power.

The rotor 102 may comprise three rotor blades 104 as shown in Fig. 1. However, the rotor 102 may alternatively be provided with another number of rotor blades 104, such as one, two or even more than three rotor blades 104.

The wind turbine 100 may be actively controlled so that the rotor 102 is turned to face the wind direction. This implies that the wind turbine 100 may be able to as efficiently as possible capture the energy in the blowing wind.

The rotor blade 104 is shaped so that air passing the rotor blade 104 will create a lift force on the rotor blade 104 in the rotational direction of the rotor blade 104. In this regard, the rotor blade 104 may comprise two or more wing members, as further described below, having an airfoil-shape, which implies that the pressure will differ on different sides of the airfoil-shape generating the lift force. The rotor blade 104 may be arranged so that the airfoil-shape is tilted in relation to the wind direction. The tilt angle is called an angle of attack. The angle of attack may affect the lift force and drag force of the rotor blade 104 and at a critical angle of attack a maximum lift force to drag force ratio is generated by the airfoil-shape.

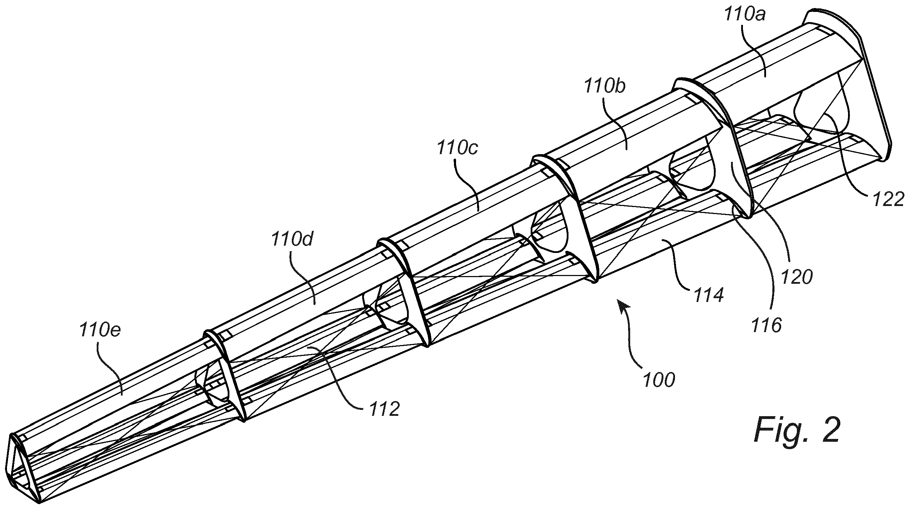

Referring now to Fig. 2, a rotor blade 104 according to the invention will be further described. The rotor blade 104 comprises a plurality of wing members 110, 112, 114. Although three wing members are shown in Fig. 2, it should be realized that the rotor blade 104 may comprise only two wing members or may even comprise four or more wing members.

The wing members 110, 112, 114 extend along each other at a distance from each other, and along a longitudinal direction of the rotor blade 104. Each of the wing members 110, 112, 114 may have an airfoil shaped cross-section for providing a lift force to the rotor blade 104.

Each wing member 110, 112, 114 may be divided into a plurality of sub-members 110a-e, wherein the sub-members are arranged one after another along the longitudinal direction of the rotor blade 104. Thus, the wing members 110, 112, 114 may be formed in sections, which may greatly simplify transport of the wing members 110, 112, 114 to a wind turbine site.

The sub-members 110a-e may each have an airfoil shaped cross-section for providing a lift force. The airfoil shaped cross-section of the sub-member 110a-e may be provided at an angular orientation about the longitudinal direction so as to provide an appropriate angle of attack in relation to a wind direction. The angular orientation of the sub-member 110a closest to the central hub 106 is called an inner end angular orientation and the angular orientation of the sub-member 110e farthest away from the central hub 106 is called an outer end angular orientation.

Each wing member 110, 112, 114 may comprise interfaces 116 between two adjacent sub-members 110a-e along the longitudinal direction. At such an interface 116, the inner sub-member 110a closest to the central hub 106 has its outer end angular orientation and the outer sub-member 110b farther away from the central hub 106 has its inner end angular orientation.

The appropriate angle of attack of the wing member 110, 112, 114 may differ along its longitudinal direction, due to the speed of the wing member 110, 112, 114 farther away from the central hub 106 being larger than the speed of the wing member 110, 112, 114 closer to the central hub 106. Therefore, it may be desired that the wing member 110, 112, 114 is provided with a twist, such that the angular orientation differs along its longitudinal direction.

At the interface 116, the outer end angular orientation of the inner sub-member 110a may differ from the inner end angular orientation of the outer sub-member 110b. This implies that the sub-members 110a-e need not be manufactured with exact requirements on the inner end angular orientation and the outer end angular orientation to fit the respective outer end angular orientation and inner end angular orientation of adjacent sub-members 110a-e. This provides an improved degree of freedom in designing the sub-members 1 10a-e, which may be used to form sub-members 110a-e having simple shapes which may be easily manufactured. However, it may cause a reduced lift force to drag force ratio on the wing member 110, 112, 114 due to the wing member 110, 112, 114 not having an ideal shape at the interface 116.

According to an embodiment, as shown in Fig. 2, the rotor blade 104 comprises a truss-like structure having elements that form a number of triangles. The truss-like structure implies that the individual elements are principally only subject to tensile and compressive forces, which means that the elements may be made thin while maintaining a strong overall structure.

The truss-like structure may comprise wing members 110, 112, 114, which may each be formed by sub-members 110a-e, extending in a longitudinal direction of the rotor blade 104, connector plates 120 extending in a cross-sectional direction of the rotor blade 104 and diagonal truss members 122 extending diagonally through the rotor blade 104 between two connector plates 120. The members are attached to each other in such manner as to form triangles, which are defined by a wing member 110, 112, 114, a diagonal truss member 122 and a connector plate 120. Together, the triangles form a structure that is the union of tetrahedron units.

Since the elements of the truss-like structure may be very thin, the overall weight of the rotor blade 104 is low. A light weight rotor blade 104 has a number of advantages. For instance, a small amount of material is required for the manufacture of the rotor blade 104, which makes the cost of the rotor blade 104 low. The light weight of the rotor blade 104 implies that gravity loads are limited, which also limits problems due to associated fatigue of the rotor blade 104.

Also, the truss-like structure provides a large flexural rigidity of the rotor blade 104. Hence, problems due to deformation of the rotor blade 104 and torsion loads on the rotor blade 104 are limited. Further, the flexural rigidity may limit a deflection of a tip of the rotor blade 104, such that the wind turbine 100 may be able to operate in strong winds without a risk of the tip of the rotor blade 104 hitting the tower. Thus, the percentage of time that the wind turbine 100 is operational may be increased and hence the overall efficiency of the wind turbine 100 may be increased.

Further, a light weight rotor blade 104 limits forces on other structures of the wind turbine 100, such as bearings, a tower and a foundation of the wind turbine 100. Hence, the tower and foundation may also be relatively light weight, since they need only support a light weight rotor blade 104 decreasing manufacturing costs of these parts of the wind turbine 100.

The truss-like structure is especially suited for transportation in parts, such that the rotor blade 104 may be transported in parts to a site where the wind turbine 100 is to be installed and assembled at the site. Also, the light weight of the rotor blade 104 makes the rotor blade 104 or the parts of the rotor blade 104 easier to transport to a site where the wind turbine 100 is to be installed and the installation of the wind turbine 100 is facilitated as well.

The light weight and the flexural rigidity of the rotor blade 104 may thus enable installing large-scale wind turbines 100, which may otherwise not be possible due to forces on the parts of the wind turbine 100. This may be especially suitable for off-shore wind turbines 100. Off-shore wind turbines 100 are often of larger scale than land based wind turbines 100, since it may be easier to transport large parts to off-shore sites using ships and the wind turbine 100 may be placed remotely such that noise created by the wind turbine 100 may not affect or disturb people.

The light weight of the rotor blade 104 and the ability to transport the rotor blade 104 in parts may also facilitate transport of the rotor blade 104, such that wind turbines 100 may be installed at sites which may otherwise be difficult to access.

However, the utility of a light weight rotor blade 104 is not limited to large-scale wind turbines 100. Since manufacturing costs of the rotor blade 104 may be relatively low, a wind turbine 100 using the light weight rotor blade 104 may be cheaper to manufacture and install, regardless of size of the wind turbine 100.

The truss-like structure implies that air may pass over a plurality of elements in the rotor blade 104. The air passing over the plurality of elements will contribute to increasing the drag force on the rotor blade 104 and thereby decreasing efficiency of capturing the wind energy. However, the lift-to-drag ratio of the rotor blade 104 may still be relatively good and not differ substantially from a rotor blade having a unitary shape. Further, as the truss-like structure of the rotor blade 104 may allow installing a larger scale wind turbine 100 than otherwise possible, the power production capacity of the wind turbine 100 may still be significantly increased.

As shown in Fig. 2, the wing members 110, 112, 114 may be arranged to have an airfoil-shaped cross-section and may be designed and dimensioned based on desired aerodynamic properties. The wing members 110, 112, 114 may thus have dimensions much larger than required in order to provide adequate support of the truss-like structure. Rather, the wing members 110, 112, 114 may be sized to provide a large cross-section such that the aerodynamic properties are optimized.

The diagonal truss members 122 may be arranged to mainly provide support in the truss-like structure. The diagonal truss members 122 may thus be arranged to withstand tension and compression loads. The diagonal truss members 122 may be arranged to be solid parts, which implies that the cross-sectional surface of the diagonal truss members 122 is kept small in order to limit the drag force created by the presence of the diagonal truss members 122.

The diagonal truss members 122 may further have an airfoil-shaped cross-section in order to further limit a drag force created by the diagonal truss member 122. Thus, the diagonal truss member 122 may also contribute to the lift force created by the rotor blade 104. The diagonal truss member 122 should however be limited in the cross-sectional size so as to limit the lift force on the diagonal truss member 122. If the lift force becomes too large, there is a risk that the diagonal truss member 122 will bend to an undesired extent.

The interfaces 116 between two sub-members 110a-e of a wing member 110, 112, 114 may be formed at joints in the truss-like structure. Thus, the two sub-members 110a-e may be connected at an interface 116, where a connection to the connector plate 120 and to diagonal truss members 122 is also provided.

Since the interface 116 may already provide a drag force on the rotor blade 104, due to the wing member 110, 112, 114 being connected to a connector plate 120 and diagonal truss members 122 at the interface, the interface 116 may also be used for providing a discrete change of shape and/or angular orientation of a cross-section of the wing member 110, 112, 114.

According to an embodiment, the wing member 110, 112, 114 comprises a plurality of sub-members 1 10a-e, which are connected to each other in a plurality of interfaces 116. The wing member 110, 112, 114 is thus provided with a plurality of positions, each interface 116, where a shape and/or angular orientation of a cross-section may be changed. Thus, the wing member 110, 112, 114 may be formed of sub-members 1 10a-e, which each have a uniform cross-section and angular orientation along its length, such that the manufacturing of each sub-member 110a-e may be very simple.

The wing member 110, 112, 114 may need to be twisted along its longitudinal direction. Also, a size of the cross-section of the wing member 110, 112, 114 may be decreasing towards a tip of the rotor blade 104.

An airfoil shape may be defined as comprising a leading edge, which is a point at a front of the airfoil that has maximum curvature, and a trailing edge, which is a point at a rear of the airfoil that has maximum curvature. A chord line is defined by a straight line connecting the leading edge and the trailing edge. The wing member 110, 112, 114 may be arranged to have the same airfoil shape along its entire longitudinal direction. However, a length of the chord line may decrease towards the tip of the rotor blade 104 and also an angular orientation of the chord line around the longitudinal direction may differ.

The interfaces 116 need not be equidistantly arranged along the longitudinal direction of the wing member 110, 112, 114. Rather, placement of the interfaces 116, and hence length of the respective sub-members 1 10a-e, may be varied in dependence of a need to change a chord line length or angular direction of the wing member 110, 112, 114.

The difference in angular orientation may be larger closer to the central hub 106, which may imply that the distance between interfaces 116 should be shorter. However, the change of angular orientation at the interface 116 may also be allowed to be larger closer to the hub 106 as the speed of the rotor blade 104 is relatively small and, hence, a drag force caused by the change in angular orientation is relatively small.

As further described below, connector plates 120 may be arranged at the interfaces 116, providing a structural stability of the rotor blade 104. The placement of the interfaces 116 may thus also depend on a requirement of minimum distance between connector plates 120 in order to provide sufficient structural stability.

Thus, according to an embodiment, the distance between interfaces 116 is shorter closer to the hub 106 and also, the change in angular orientation is also larger at interfaces 116 closer to the hub 106.

The length of the chord line for a rotor blade having unitary shape may initially increase and then decrease towards the tip of the blade.

Even though there may be a desire to initially increase the length of the chord line, the length is not necessarily increased at an innermost interface 116 of the wing member 110, 112, 114. This interface 116 may still be too far away from the hub 106 in order for an increase of the length of the chord line to be appropriate. Instead a compromise decision may be taken for the length of the chord line of the innermost sub-member 110a to fit an optimal chord line length.

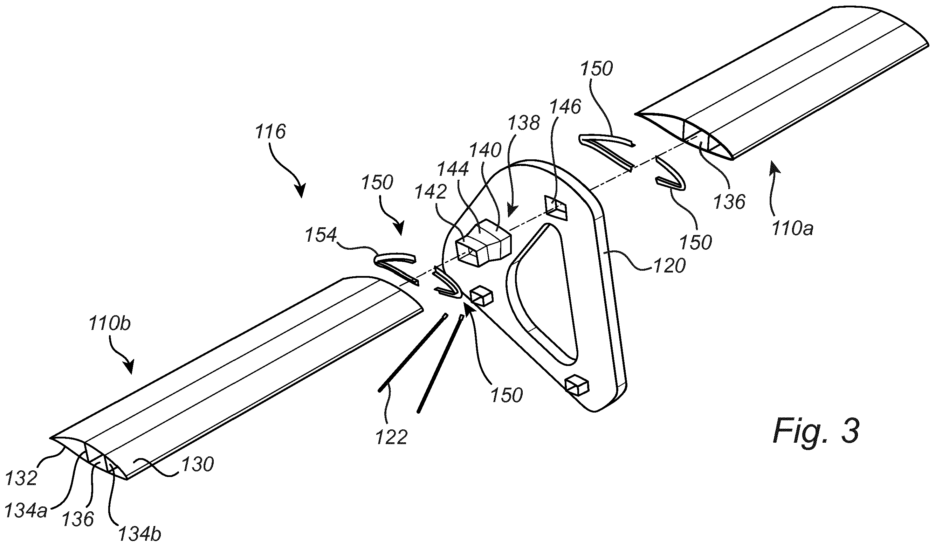

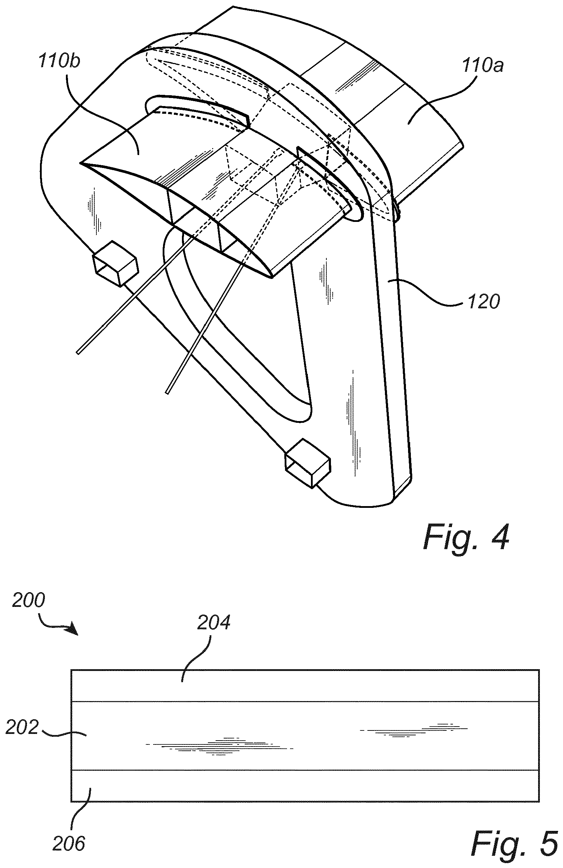

Referring now to Figs 3 and 4, the interface 116 between a first sub-member 110a and a second sub-member 110b, and the sub-members 110a-b, will be further described.

The first and the second sub-member 110a-b each comprise a longitudinally extending first part 130 of a wing profile and a longitudinally extending second part 132 of the wing profile. The first and second parts 130, 132 of the wing profile are connected to each other thereby forming a hollow shell structure, which may be of a very light weight. The first and second parts 130, 132 of the wing profile also together form the airfoil-shaped cross-section of the sub-member 110a-b.

The first and second sub-member 110a-b may further comprise at least one inner support member. As shown in Fig. 3, two inner support members 134a-b are provided. Each inner support member 134a-b extends inside the shell structure from an inside of the first part 130 of the wing profile to an inside of the second part 132 of the wing profile. The inner support members 134a-b provide a support of the shell structure to prevent the shell structure to buckle or otherwise deform when subject to an external force.

The first and second parts 130, 132 of the wing profile may have a uniform cross-section along the longitudinal direction of the support member 110a-b from the inner end to the outer end. Further, the entire sub-member 110a-b may have a uniform cross-section along the longitudinal direction from the inner end to the outer end. This implies that the sub-member 110a-b has a simple structure, which may facilitate manufacture of the sub-member 110a-b.

For instance, the sub-members 110a-b may have a constant chord length along the longitudinal direction. Also or alternatively, the sub-members 110a-b may have a uniform angular orientation of the cross-section along the longitudinal direction.

The inner support members 134a-b together with the inside of the first part 130 of the wing profile and the inside of the second part 132 of the wing profile also form a connection tube 136 with a longitudinal extension inside the shell structure of the sub-member 1 10a-b. Alternatively, the inner support members 134a-b may also include connector members extending close to the inside of the first part 130 of the wing profile and the second part 132 of the wing profile, respectively, such that the inner support members 134a-b together with the connector members form the connection tube 136.

The connection tube 136 is adapted to receive a connector rod 138. The connector rod 138 may be inserted into the connection tube 136 of both the first and the second sub-member 110a-b for interconnecting the sub-members 110a-b.

The connector rod 138 may be a hollow structure. This implies that the connector rod 138 may be of light weight. However, the connector rod 138 may be relatively short, in relation to an entire length of the wing member 110, 112, 114. Thus, the connector rod 138 may alternatively be a solid structure and the connector rod 138 may thus be strong and more resistant to external forces.

The connector rod 138 may have a first and a second portion 140, 142, along a longitudinal direction of the connector rod 138. Each portion 140, 142 may be adapted to be inserted into the connection tube 136 of the first and the second sub-members 1 10a-b, respectively. Thus, the first portion 140 may have an outer shape that is adapted to fit into the connection tube 136 of the first sub-member 110a. The second portion 142 may have an outer shape that is adapted to fit into the connection tube 136 of the second sub-member 110b.

The connector rod 138 may also have an intermediate portion 144, which is arranged between the first and second portions 142. The intermediate portion 144 may provide a transition of an outer shape of the connector rod 138 from the outer shape of the first portion 140 to the outer shape of the second portion 142. The intermediate portion 144 may especially be necessary if a hollow shape of the connector rod 138 is used.

The connector rod 138 may be inserted into the first sub-member 110a, such that the first portion 140 and the intermediate portion 144 are inserted into the connection tube 136 of the first sub-member 110a. The intermediate portion 144 may typically be inserted into an inner sub-member 110a, since this sub-member 110a may have a larger cross-section than the outer sub-member 110b. Thus, the second portion 142 of the connector rod 138 may be inserted into the connection tube 136 of the second sub-member 110b.

As previously described, a connector plate 120 may also be connected at the interface 116. The connector plate 120 may comprise a through-going hole 146, through which the connector rod 138 may be arranged. Alternatively, the connector plate 120 may comprise a recess at an outer edge of the connector plate 120, such that the connector rod 138 may be arranged in contact with the recess.

The connector plate 120 may be hollow. In an embodiment, an outer shell defines the shape of the connector plate 120. Especially for large size connector plates 120, a hollow connector plate 120 may be advantageous as it may ensure that the connector plate 120 is of a light weight.

The second portion 142 of the connector rod 138 may be arranged in contact with the connector plate 120. As the intermediate portion 144 may be fully inserted into the first sub-member 110a, this implies that the connector plate 120 may be arranged in close contact with both the first and the second sub-member 110a-b. However, it should be realized that the first portion, or specifically shaped further portions of the connector rod 138 may be arranged in contact with the connector plate 120 instead.

The connector rod 138 may have a non-circular outer envelope surface at both the first and the second portions 140, 142. The connection tube 136 of the first sub-member 110a, the through-going hole 146, and the connection tube 136 of the second sub-member 110b may have a fully or partly correspondingly shaped inside envelope surfaces such that the connector rod 138 is prevented from relative rotational movement about an axis along the longitudinal direction in relation to the connection tube 136 of the first sub-member 110a, the through-going hole 146, and the connection tube 136 of the second sub-member 110b. This implies that the connector rod 138 may be firmly attached to the first and second sub-members 110a-b and the connector plate 120 and that a risk of the connector rod 138 moving out of engagement with any of the first or second sub-members 1 10a-b is diminished.

The connector rod 138 may also be attached to the sub-members 110a-b and the connector plate 120 with an adhesive joint, using e.g. epoxy or by other attachment means, such as using screws, bolts or nails.

There may be a gap between the intermediate portion 144 of the connector rod 138 and the connection tube 136 of the first sub-member 110a. This gap may be filled with further adhesive or with additional material. For instance, a fibre reinforced polymer, such as carbon fibre, may be used for both manufacturing of parts of the rotor blade 104 and for filling the gap between the intermediate portion 144 and the connection tube 136.

One or more frame members 150 may be further arranged at an end of the first and second sub-members 110a-b. Each frame member 150 may have a first portion 152 with a shape that may closely fit to an inner shape of the shell structure of the sub-member 110a-b. Thus, the frame member 150 may form a tight connection to the sub-member 110a-b, which may be reinforced by means of an adhesive or by other attachment means. The frame member 150 may also have a second portion 154 forming a flange, which may extend parallel to an end surface of the sub-member 1 10a-b. The flange may provide a surface allowing forming of a strong attachment between the sub-member 110a-b and the connector plate 120. For instance, the flange may be attached by an adhesive or by other attachment means to the connector plate 120.

As shown in Fig. 3, two frame members 150 may be arranged between each sub-member 110a-b and the connector plate 120. Each frame member 150 may thus be arranged in the sub-member 110a-b between the first and second parts 130, 132 of the wing profile, extending from a portion where the first and second parts 130, 132 meet towards a support member 134a-b inside the wing profile.

The diagonal truss member 122 may also be connected at the interface 116. The diagonal truss member 122 may be connected to one of the sub-members 110a-b or to the connector plate 120. According to one embodiment, the diagonal truss member 122 may extend through a surface of one of the sub-members 110a-b or of the connector plate 120 to also be connected to the connector rod 138.

As described above, the rotor blade 104 may comprise a plurality of elements extending along a longitudinal direction of the rotor blade 104, which elements of the rotor blade 104 have a uniform cross-section along the longitudinal direction thereof. The sub-members 110a-e of wing members 110, 112, 114 may have a uniform cross-section. Similarly, the diagonal truss members 122 may have a uniform cross-section. Further, the rotor blade 104 may advantageously be formed merely of fibre reinforced polymer parts, as e.g. the rotor blade 104 may be light weight while structurally strong. Using only fibre reinforced polymer parts, there may be a reduced risk of lightning striking the rotor blade 104. In one embodiment, a carbon fibre-reinforced polymer may be used.

Manufacturing of parts having a uniform cross-section may be particularly simple. According to one embodiment, the elements may be manufactured by means of pultrusion, which is especially suitable for manufacture of composite materials with a constant cross-section. A reinforcement material like fibres or woven or braided strands are impregnated with resin, and pulled through a heated stationary die where the resin undergoes polymerization. Impregnation may either be done by pulling the reinforcement through a bath or by injecting the resin into an injection chamber which is typically connected to the die. The structure thus formed may then be cut to the desired length.

Hence, using pultrusion, it is very simple to change lengths of parts to be used in the rotor blade 104, e.g. for forming rotor blades 104 of different lengths. Thus, manufacturing of rotor blades 104 may very easily be adapted to different sizes of rotor blades 104.

Although pultrusion may be particularly useful for manufacturing of the rotor blades 104 as described above, it should be realized that other ways of manufacturing may be used instead. For instance, extrusion moulding or injection moulding may be used instead.

Elements, such as the sub-members 110a-e and/or the connector plate 120 need not be formed from a homogenous material. According to an embodiment illustrated in Fig. 5, a sandwich structure 200 may be used in order to provide an element having light weight and high bending stiffness. The sandwich structure 200 may comprise a thick core material 202, an outer structure 204 and an inner structure 206 on each side of the thick core material 202.

The core material 202 may be formed from a material having relatively low material strength and relatively low density. For instance, a plastic material, such as polyvinyl chloride, or another material that may form a structural foam may be used.

The inner and outer structures 204, 206 may be formed from a material having relatively large material strength in order to provide a bending stiffness to the sandwich structure 200. The inner and outer structures 204, 206 may for instance be formed by carbon fibre.

The wing profile of a sub-member 110a-e may be formed from a material having a sandwich structure 200. The manufacture of such a sub-member may be achieved in several different ways.

According to an embodiment, the core material 202 is included in the pultrusion process, so that the sub-member 110a-e is formed using pultrusion as described above.

According to another embodiment, an outer structure 204 is separately formed, e.g. by pultrusion, defining an outside of the shell structure of the sub-member 110a-e. Further, an inner structure 206 is separately formed, e.g. by pultrusion, defining an inside of the shell structure of the sub-member 1 10a-e. The inner structure 206 may then be inserted into the outer structure 204 together with the core material 202 for forming a sandwich structured sub-member 110a-e.

According to yet another embodiment, the outer structure 204 defining the outside of the shell structure of the sub-member 110a-e is formed simultaneously with the inner structure 206 defining the inside of the shell structure of the sub-member 110a-e, e.g. by pultrusion. Then, the core material 202 may be pumped into a space between the outer and inner structures 204, 206 so that the core material fills up a volume between the outer and inner structures 204, 206.

The sandwich structure 200 may be used for all parts of the sub-member 1 10a-e, such as all parts of the wing profile, including a leading edge portion where the first and second parts 130, 132 of the wing profile meet, a trailing edge portion where the first and second parts 130, 132 of the wing profile meet, the inner support members 134a-b, and a portion of the wing profile between the inner support members 134a-b. However, according to an alternative, not all parts of the wing profile, such as the inner support members 134a-b and/or a portion of the wing profile between the inner support members 134a-b, are formed from the sandwich structure 200.

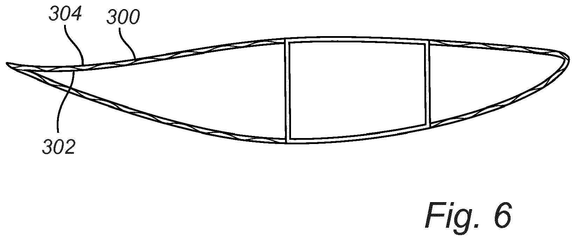

According to an embodiment, illustrated in Fig. 6, a structure of an element, such as the sub-members 1 10a-e, may comprise a corrugated carbon fibre 300 between an inner structure 302 and an outer structure 304. The corrugated carbon fibre 300 may reinforce the structure in order to provide a bending stiffness to the sub-member 110a-e.

The sub-member 110a-e including a corrugated carbon fibre 300 may be formed by pultrusion by including the corrugated carbon fibre in the pultrusion process.

It is contemplated that there are numerous modifications of the embodiments described herein, which are still within the scope of the invention as defined by the appended claims. For instance, although the rotor blade is mainly described as having a truss-like structure, it should be realized that the rotor blade need for instance not necessarily comprise diagonal truss members connecting wing members. Rather, the invention provides a manner of providing wing members in sections of at least a first and a second sub-member. Also, the rotor blade may be used for vertical-axis wind turbines instead of horizontal-axis wind turbines as explained herein.

## Claims

1. A rotor blade for a wind turbine, the rotor blade comprising
two or more wing members (110, 112, 114) extending along each other, at a distance from each other, and along a longitudinal direction of the rotor blade (104),
wherein each wing member has an airfoil shaped cross-section as seen in a plane transverse to the longitudinal extension of the wing member,
wherein each wing member (110, 112, 114) is divided into at least a first sub-member (110a) and a second sub-member (110b), the sub-members (110a-b) being arranged one after another along the longitudinal direction,
wherein each sub-member comprises
a longitudinally extending first part (130) of a wing profile and a longitudinally extending second part (132) of the wing profile, the parts (130, 132) of the wing profile being connected to each other thereby forming a shell structure, and
at least one inner support member, preferably at least two inner support members (134a-b), extending inside the shell structure from an inside of the first part (130) of the wing profile to an inside of the second part (132) of the wing profile,
wherein each sub-member (110a-b) is arranged in the rotor blade (104) with an inner end angular orientation about the longitudinal direction at an inner end and an outer end angular orientation about the longitudinal direction at an outer end thereby forming a discrete portion of the longitudinal extension of respective wing member,
wherein, in each wing member (110, 112, 114), at an interface (116) between the first and the second sub-member (110a-b), the first sub-member (110a) is arranged in the rotor blade (104) with said outer end angular orientation about the longitudinal direction and the second sub-member (110b) is arranged in the rotor blade (104) with said inner end angular orientation about the longitudinal direction, the inner end angular orientation of the second sub-member (110b) being different from the outer end angular orientation of the first sub-member (110a).

2. A rotor blade according to claim 1,
wherein each wing member (110, 112, 114) is divided into at least a first, a second, and a third sub-member (110a-e),
wherein, in each wing member, at an interface (116) between the second and the third sub-member, the second sub-member (110b) is arranged in the rotor blade with said outer end angular orientation about the longitudinal direction and the third sub-member is arranged in the rotor blade with said inner end angular orientation about the longitudinal direction, the inner end angular orientation of the third sub-member being different from the outer end angular orientation of the second sub-member (110b).

3. A rotor blade according to claim 2, wherein,
at the interface (116) between the first and second sub-member (110a-b), the inner end angular orientation of the second sub-member (1 10b) is shifted a first angle in a first direction relative to the outer end angular orientation of the first sub-member (110a), wherein,
at the interface (116) between the second and third sub-member, the inner end angular orientation of the third sub-member is shifted a second angle in the first direction relative to the outer end angular orientation of the second sub-member (110b), and
wherein the second angle preferably is smaller than the first angle.

4. A rotor blade according to any one of claims 2-3, wherein the third sub-member has a length along the longitudinal direction being larger than a length of the first sub-member (110a) along the longitudinal direction.

5. A rotor blade according to any one of claims 1-4, wherein in at least one, and preferably all, sub-members (110a-e) of each wing member (110, 112, 114) is formed along a plane such that, for respective sub-member, the inner end angular orientation is equal to the outer end angular orientation.

6. A rotor blade according to any one of claims 1-5,
wherein said inner support member or members (134a-b) together with the inside of the first part (130) of the wing profile and the inside of the second part (132) of the wing profile form a connection tube (136) with a longitudinal extension inside the shell structure of the sub-member (110a-e),
wherein the connection tube (136) is adapted to receive a connector rod (138) for interconnecting the sub-member to an adjacent sub-member by the connector rod (138) also being received in a connection tube (136) of said adjacent sub-member.

7. A rotor blade according to any one of claims 1-6, wherein the first and second parts (130, 132) of the wing profile are formed of a fibre reinforced polymer.

8. A rotor blade according to claim 6 or 7, wherein said inner support member or members (134a-b) are formed of a fibre reinforced polymer.

9. A rotor blade according to any one of claims 1-8, wherein the first and second parts (130, 132) of the wing profile each has a uniform cross-section along the longitudinal direction from the inner end to the outer end.

10. A rotor blade according to any one of claims 1-9, wherein the sub-members (110a-e) each has a uniform cross-section along the longitudinal direction from the inner end to the outer end.

11. A rotor blade according to any one of claims 1-10, wherein the sub-members are produced using a sandwich structure (200) comprising a core material (202), an outer structure (204) and an inner structure (206) on each side of the core material (202).

12. A rotor blade according to any one of claims 1-11, wherein one or more frame members (150) are arranged at respective end of respective sub-member.

13. A rotor blade according to any one of claims 1-12, wherein the interfaces (116) between the first and second sub-members (110a-b) are positioned at corresponding longitudinal positions for each wing member (110, 112, 114), wherein a connector member (120) is positioned at said interface (116).

## Patentansprüche

1. Rotorblatt für eine Windturbine, das Rotorblatt umfassend
zwei oder mehr Flügelglieder (110, 112, 114), die aneinander entlang, in einem Abstand zueinander und entlang einer Längsrichtung des Rotorblatts (104) verlaufen,
wobei jedes Flügelglied bei Betrachtung in einer Ebene, die quer zur Längsausdehnung des Flügelglieds verläuft, einen tragflächenartigen Querschnitt aufweist,
wobei jedes Flügelglied (110, 112, 114) in zumindest ein erstes Teilglied (110a) und ein zweites Teilglied (110b) aufgeteilt ist, wobei die Teilglieder (110a-b) eines nach dem anderen entlang der Längsrichtung angeordnet sind,
wobei jedes Teilglied umfasst:
ein längsverlaufendes erstes Teil (130) eines Flügelprofils und ein längsverlaufendes zweites Teil (132) des Flügelprofils, wobei die Teile (130, 132) des Flügelprofils miteinander verbunden sind, wodurch eine Schalenstruktur ausgebildet ist, und
zumindest ein inneres Stützglied, vorzugsweise zumindest zwei innere Stützglieder (134a-b), die innerhalb der Schalenstruktur von einer Innenseite des ersten Teils (130) des Flügelprofils zu einer Innenseite des zweiten Teils (132) des Flügelprofils verlaufen,
wobei jedes Teilglied (110a-b) im Rotorblatt (104) mit einer Innenendenwinkelausrichtung um die Längsrichtung an einem Innenende und einer Außenendenwinkelausrichtung um die Längsrichtung an einem Außenende angeordnet ist, wodurch ein diskreter Abschnitt der Längsausdehnung des jeweiligen Flügelglieds ausgebildet wird,
wobei bei jedem Flügelglied (110, 112, 114) an einer Grenzfläche (116) zwischen dem ersten und dem zweiten Teilglied (110a-b) das erste Teilglied (110a) im Rotorblatt (104) mit der Außenendenwinkelausrichtung um die Längsrichtung angeordnet ist und das zweite Teilglied (110b) im Rotorblatt (104) mit der Innenendenwinkelausrichtung um die Längsrichtung angeordnet ist,
wobei die Innenendenwinkelausrichtung des zweiten Teilglieds (110b) von der Außenendenwinkelausrichtung des ersten Teilglieds (110a) abweicht.

2. Rotorblatt nach Anspruch 1,
wobei jedes Flügelglied (110, 112, 114) in zumindest ein erstes, ein zweites und ein drittes Teilglied (100a-e) aufgeteilt ist,
wobei bei jedem Flügelglied an einer Grenzfläche (116) zwischen dem zweiten und dem dritten Teilglied das zweite Teilglied (110b) im Rotorblatt mit der Außenendenwinkelausrichtung um die Längsrichtung angeordnet ist und das dritte Teilglied im Rotorblatt mit der Innenendenwinkelausrichtung um die Längsrichtung angeordnet ist, wobei die Innenendenwinkelausrichtung des dritten Teilglieds von der Außenendenwinkelausrichtung des zweiten Teilglieds (110b) abweicht.

3. Rotorblatt nach Anspruch 2, wobei
an der Grenzfläche (116) zwischen dem ersten und zweiten Teilglied (110a-b) die Innenendenwinkelausrichtung des zweiten Teilglieds (110b) um einen ersten Winkel in einer ersten Richtung bezüglich der Außenendenwinkelausrichtung des ersten Teilglieds (110a) verschoben ist, wobei
an der Grenzfläche (116) zwischen dem zweiten und dritten Teilglied die Innenendenwinkelausrichtung des dritten Teilglieds um einen zweiten Winkel in der ersten Richtung bezüglich der Außenendenwinkelausrichtung des zweiten Teilglieds (110b) verschoben ist, und
wobei der zweite Winkel vorzugsweise kleiner als der erste Winkel ist.

4. Rotorblatt nach einem der Ansprüche 2 bis 3, wobei das dritte Teilglied eine Länge entlang der Längsrichtung aufweist, die länger als eine Länge des ersten Teilglieds (110a) entlang der Längsrichtung ist.

5. Rotorblatt nach einem der Ansprüche 1 bis 4, wobei zumindest ein, vorzugsweise alle, Teilglieder (110a-e) von jedem Flügelglied (110, 112, 114) derart entlang einer Ebene ausgebildet ist, dass für das jeweilige Teilglied die Innenendenwinkelausrichtung gleich der Außenendenwinkelausrichtung ist.

6. Rotorblatt nach einem der Ansprüche 1 bis 5,
wobei das innere Stützglied oder -glieder (134a-b) zusammen mit der Innenseite des ersten Teils (130) des Flügelprofils und der Innenseite des zweiten Teils (132) des Flügelprofils ein Verbindungsrohr (136) mit einer Längsausdehnung innerhalb der Schalenstruktur des Teilglieds (110a-e) ausbilden,
wobei das Verbindungsrohr (136) zum Aufnehmen einer Verbindungsstange (138) zum Verbinden des Teilglieds mit einem benachbarten Teilglied durch die Verbindungsstange (138) geeignet ist, welche ebenfalls in einem Verbindungsrohr (136) des benachbarten Teilglieds aufgenommen ist.

7. Rotorblatt nach einem der Ansprüche 1 bis 6, wobei das erste und zweite Teil (130, 132) des Flügelprofils aus faserverstärktem Polymer ausgebildet ist.

8. Rotorblatt nach Anspruch 6 oder 7, wobei das innere Stützglied oder - glieder (134a-b) aus faserverstärktem Polymer ausgebildet sind.

9. Rotorblatt nach einem der Ansprüche 1 bis 8, wobei das erste und zweite Teil (130, 132) des Flügelprofils jedes einen einheitlichen Querschnitt entlang der Längsrichtung vom Innenende zum Außenende aufweist.

10. Rotorblatt nach einem der Ansprüche 1 bis 9, wobei die Teilglieder (110a-e)jedes einen einheitlichen Querschnitt entlang der Längsrichtung vom Innenende zum Außenende aufweisen.

11. Rotorblatt nach einem der Ansprüche 1 bis 10, wobei die Teilglieder unter Verwendung einer Sandwichstruktur (200) gefertigt sind, die ein Kernmaterial (202), eine Außenstruktur (204) und eine Innenstruktur (206) auf jeder Seite des Kernmaterials (202) umfasst.

12. Rotorblatt nach einem der Ansprüche 1 bis 11, wobei ein oder mehr Rahmenglieder (150) am jeweiligen Ende eines jeweiligen Teilglieds angeordnet sind.

13. Rotorblatt nach einem der Ansprüche 1 bis 12, wobei die Grenzflächen (116) zwischen den ersten und zweiten Teilgliedern (110a-b) an entsprechenden Längspositionen für jedes Flügelglied (110, 112, 114) positioniert sind, wobei ein Verbindungsglied (120) an der Grenzfläche (116) positioniert ist.

## Revendications

1. Pale de rotor pour une éolienne, la pale de rotor comprenant
un ou plusieurs éléments d'aile (110, 112, 114) s'étendant les uns le long des autres, à une distance les uns des autres, et le long d'une direction longitudinale de la pale de rotor (104),
dans laquelle chaque élément d'aile présente une section transversale en forme de profil aérodynamique, vu dans un plan transversal à l'extension longitudinale de l'élément d'aile,
dans laquelle chaque élément d'aile (110, 112, 114) est divisé en au moins un premier sous-élément (110a) et un deuxième sous-élément (110b), les sous-éléments (110a-b) étant disposés l'un à la suite de l'autre le long de la direction longitudinale,
dans laquelle chaque sous-élément comprend
une première partie s'étendant longitudinalement (130) d'un profil d'aile et une deuxième partie s'étendant longitudinalement (132) du profil d'aile, les parties (130, 132) du profil d'aile étant reliées les unes aux autres, formant ainsi une structure de coque, et
au moins un élément de support intérieur, de préférence au moins deux éléments de support intérieurs (134a-b), s'étendant à l'intérieur de la structure de coque depuis un intérieur de la première partie (130) du profil d'aile jusqu'à un intérieur de la deuxième partie (132) du profil d'aile,
dans laquelle chaque sous-élément (110a-b) est disposé dans la pale de rotor (104) avec une orientation angulaire d'extrémité intérieure autour de la direction longitudinale au niveau d'une extrémité intérieure et une orientation angulaire d'extrémité extérieure autour de la direction longitudinale au niveau d'une extrémité extérieure, formant ainsi une partie discrète de l'extension longitudinale d'un élément d'aile,
dans laquelle, dans chaque élément d'aile (110, 112, 114), au niveau d'une interface (116) entre les premier et deuxième sous-éléments (110a-b), le premier sous-élément (110a) est disposé dans la pale de rotor (104) avec ladite orientation angulaire d'extrémité extérieure autour de la direction longitudinale, et le deuxième sous-élément (110b) est disposé dans la pale de rotor (104) avec ladite orientation angulaire d'extrémité intérieure autour de la direction longitudinale, l'orientation angulaire d'extrémité intérieure du deuxième sous-élément (110b) étant différente de l'orientation angulaire d'extrémité extérieure du premier sous-élément (110a).

2. Pale de rotor selon la revendication 1,
dans laquelle chaque élément d'aile (110, 112, 114) est divisé en au moins un premier, un deuxième et un troisième sous-élément (110a-e),
dans laquelle, dans chaque élément d'aile, au niveau d'une interface (116) entre le deuxième et le troisième sous-élément, le deuxième sous-élément (110b) est disposé dans la pale de rotor avec ladite orientation angulaire d'extrémité extérieure autour de la direction longitudinale et le troisième sous-élément est disposé dans la pale de rotor avec ladite orientation angulaire d'extrémité intérieure autour de la direction longitudinale, l'orientation angulaire d'extrémité intérieure du troisième sous-élément étant différente de l'orientation angulaire d'extrémité extérieure du deuxième sous-élément (110b).

3. Pale de rotor selon la revendication 2, dans laquelle au niveau de l'interface (116) entre le premier et le deuxième sous-élément (110a-b), l'orientation angulaire d'extrémité intérieure du deuxième sous-élément (110b) est décalée d'un premier angle dans une première direction par rapport à l'orientation angulaire d'extrémité extérieure du premier sous-élément (110a), dans laquelle
au niveau de l'interface (116) entre le deuxième et le troisième sous-élément, l'orientation angulaire d'extrémité intérieure du troisième sous-élément est décalée d'un deuxième angle dans la première direction par rapport à l'orientation angulaire d'extrémité extérieure du deuxième sous-élément (110b), et
dans laquelle le deuxième angle est de préférence inférieur au premier angle.

4. Pale de rotor selon l'une quelconque des revendications 2 à 3, dans laquelle le troisième sous-élément présente une longueur le long de la direction longitudinale, laquelle est supérieure à une longueur du premier sous-élément (110a) le long de la direction longitudinale.

5. Pale de rotor selon l'une quelconque des revendications 1 à 4, dans laquelle l'un au moins et de préférence tous les sous-éléments (110a-e) de chaque élément d'aile (110, 112, 114) est/sont formé(s) le long d'un plan, de sorte que pour le sous-élément respectif, l'orientation angulaire d'extrémité intérieure est égale à l'orientation angulaire d'extrémité extérieure.

6. Pale de rotor selon l'une quelconque des revendications 1 à 5,
dans laquelle ledit ou lesdits élément(s) de support intérieur(s) (134a-b), ensemble avec l'intérieur de la première partie (130) du profil d'aile et l'intérieur de la deuxième partie (132) du profil d'aile, forment un tube de raccordement (136) avec une extension longitudinale à l'intérieur de la structure de coque du sous-élément (110a-e),
dans laquelle le tube de raccordement (136) est adapté pour recevoir une tige de raccordement (138), destiné à raccorder le sous-élément à un sous-élément adjacent à l'aide de la tige de raccordement (138) également reçue dans un tube de raccordement (136) dudit sous-élément adjacent.

7. Pale de rotor selon l'une quelconque des revendications 1 à 6, dans laquelle les première et deuxième parties (130, 132) du profil d'aile sont constituées d'un polymère renforcé par des fibres.

8. Pale de rotor selon la revendication 6 ou 7, dans laquelle ledit ou lesdits élément(s) de support intérieur(s) (134a-b) est/sont constitués d'un polymère renforcé par des fibres.

9. Pale de rotor selon l'une quelconque des revendications 1 à 8, dans laquelle les première et deuxième parties (130, 132) du profil d'aile présentent respectivement une section transversale uniforme le long de la direction longitudinale de l'extrémité intérieure à l'extrémité extérieure.

10. Pale de rotor selon l'une quelconque des revendications 1 à 9, dans laquelle les sous-éléments (110a-e) présentent respectivement une section transversale uniforme le long de la direction longitudinale de l'extrémité intérieure à l'extrémité extérieure.

11. Pale de rotor selon l'une quelconque des revendications 1 à 10, dans laquelle les sous-éléments sont réalisés à l'aide d'une structure en sandwich (200) comprenant un matériau central (202), une structure extérieure (204) et une structure intérieure (206) sur chaque côté du matériau central (202).

12. Pale de rotor selon l'une quelconque des revendications 1 à 11, dans laquelle un ou plusieurs éléments de cadre (150) sont disposés à une extrémité respective du sous-élément respectif.

13. Pale de rotor selon l'une quelconque des revendications 1 à 12, dans laquelle les interfaces (116) entre les premier et deuxième sous-éléments (110a-b) sont positionnés à des positions longitudinales correspondantes pour chaque élément d'aile (110, 112, 114), dans laquelle un élément de raccordement (120) est positionné au niveau de ladite interface (116).
